# EUROPEAN PATENT APPLICATION

(11) **EP 4 745 639 A1**
(43) Date of publication of application: **20.05.2026**
(21) Application number: 24927622.1
(22) Date of filing: 02.10.2024
(51) Int. Cl.: G02B 6/38, G02B 6/54, G02B 6/44

(54) **CABLE-END ASSEMBLY AND OPTICAL CONNECTOR OF AIR-BLOWN MULTI-CORE OPTICAL CABLE**

(30) Priority: 02.09.2024 KR 20240118826
(71) Applicant: TS INFOCOMM CO., LTD., Sejong 30057 (KR)
(72) Inventor: LEE, Seung-Min, Sejong 30064 (KR); PARK, Yoo-Jin, Sejong 30151 (KR)
(74) Representative: Novitas Patent AB
(86) International application number: PCT/KR2024/014993
(87) International publication number: WO 2026/049112

(57) **Abstract**

The present invention relates to an air blown apparatus of a multiple pre-connectorized optical fiber cable for air blown cable installation, in which at least one ferrule housing is arranged in series and the ferrule housing is configured to be vertically bent at a predetermined angle, so that it is possible to rapidly and easily perform an air blown cable installation operation by inducing smooth entry into a micro duct, a long groove is longitudinally formed in an outer surface of the ferrule housing so that it is possible to easily perform an air blown cable installation work by minimizing friction with the micro duct during air blown cable installation and blowing operations, and when the air blown apparatus of a multiple pre-connectorized optical fiber cable for air blown cable installation is inserted into the micro duct during the air blown cable installation and blowing operations, it is possible to easily insert the air blown apparatus due to reduction in resistance by a round portion of the front of a blowing head and to implement smooth movement inside the micro duct.

## Description

### [Technical Field]

The present invention relates to an air blown apparatus of a multiple pre-connectorized optical fiber cable for air blown cable installation and an optical connector for installing an optical fiber cable into a micro duct when the air blown cable installation of the optical fiber cable is performed at a fiber to the home (FTTH) installation site, and more specifically, to an air blown apparatus of a multiple pre-connectorized optical fiber cable for air blown cable installation and an optical connector, which can rapidly and easily perform an air blown cable installation operation by inducing smooth entry into a micro duct by arranging at least one ferrule housing in series and vertically bending the ferrule housing at a predetermined angle.

### [Background Art]

Generally, among the industrial fields, the IT industry is growing rapidly around the world, and fierce competition and efforts between industries and between countries are underway to play a leading role in the information age not only in Korea but also around the world. In particular, in the case of Korea, as the government-led high-speed communication network construction project is being promoted, core technology development and commercialization of related projects are being carried out at the same time.

Currently, the era of ubiquitous multimedia due to the Internet and portable devices requires explosive bandwidth for communication networks.

Nowadays, high-speed and long-distance mass data transmission is taken for granted. The demand for high-speed and high-quality Internet access has drawn commercial interest and has encouraged the development of an optical communication technology.

Conventionally, a moving line-based network has been the basis of telecommunications, which has been inevitably replaced by an optical network due to bandwidth limitations affecting large-capacity transmission efficiency.

The optical network has greatly increased a data transfer rate compared to the moving line-based network, and has enabled transfer of thousands of kilometers or more of different data types (video, audio, and pictures). Such an enormous increase in data transmission has caused the activation of the communication market, and installation of optical fiber cables in the home in a fiber to the home (FTTH) in which optical fibers are directly installed in the home has also increased.

An FTTH technology is a technology that connects optical fiber cables to homes to provide various information including broadcasting and communication, and is applied and installed in general houses and new apartments.

An optical fiber of an optical fiber cable transmits an optical signal, and unlike a metal wire that transmits an electrical signal, a large amount of information may be transmitted at an ultra-high speed without loss.

In an FTTH network, there are two methods of assembling a connector at a site after installing the optical fiber cable to the home, which are referred to as a mechanical connector and a fusion-type connector, in which the mechanical connector method is referred to as a field assembly-type connector method, and has a disadvantage in that an installation failure rate is high due to a high loss value after assembly, and the fusion-type connector method has a good advantage due to a low loss value after assembly, but an installation through a fusion device, which is expensive equipment, is considered as a disadvantage.

In the connector connection, the optical fiber is fixed while being adhered to a precision-processed ferrule in advance, and the facing ferrule is tightly fixed using an optical adapter.

The optical connector for connector connection is an element that connects optical fibers to each other in an optical fiber path, and tightly adheres and bonds the optical fibers by aligning the optical fibers in a central through-hole of the ferrule formed of a ceramic or the like, so as to allow both ends of the optical fibers to make physical contact with each other.

The optical connector has a structure which can be repeatedly attached and detached to be used in termination of the optical fibers and connection between the optical device and the optical fibers.

Basically, the optical connector is connected such that core wires inside the optical fiber are aligned with each other by using the optical fiber inside thereof as a core axis.

Since the core wire of the optical fiber has a small diameter of several to several tens of micrometers (µm), a technology of precisely aligning the core wires in a connection structure of the optical connector to increase the precision of optical transmission is very important.

Typically, in order to align the core axis of the optical fiber, an optical connector in the form of a ferrule having a relatively simple structure and a small connection loss is widely used.

The ferrule is used after the optical fiber is inserted in a core axis direction and then an end is polished with the optical fiber in consideration of the connection loss and the reflection loss of the optical connector.

The application of the FTTH system has become a trend around the world, and this FTTH service opens up new world possibilities for subscribers, broadens human knowledge, improves health and quality of life, makes businesses more productive, and provides many of these advantages, which is only the beginning.

However, in a home connector termination portion, which is the most important and expensive portion for successful installation of the FTTH, correct connector and technology selection is the most important priority.

Regarding the technology development process of optical connectors, reducing insertion loss was the most important key in the early stages of development of optical connectors.

Accordingly, in the mid-1970s, an optical connector had a connection loss of about 1.5 dB of a Graded-index multi-mode optical fiber using a lateral offset of 25 µm and a refractive index matching material in a gap between end sections of the optical fiber, and thereafter, in the 1980s, a multi-mode optical connector having an insertion loss of about 0.3 dB was implemented by a physical contact (PC) that reduces the gap and does not use the refractive index matching material.

Thereafter, as the use of a single-mode optical fiber is expanded, technology development is focused on reducing the lateral offset of the optical connector, reducing the gap between the end surfaces of the optical fiber without using the refractive index matching material, and thus, an average insertion loss of about 0.1 dB may be implemented, and in addition, improvement of reflection loss characteristics by the physical contact (PC) or the like is more strictly required.

Thereafter, the optical connector technology is being concentrated on the shape of the end surfaces of the optical fiber and ferrule, and research on the interconnection between the complete mechanical connector and the optical connector is required in an industrial aspect.

Therefore, in manufacturing the optical connector, epoxy-free connectors having superior assembly and bonding force compared to epoxy-type connectors having superior compatibility between an ST connector and an SC connector have become the mainstream, and single core optical connectors have reached a stabilization stage in terms of structure, and are now being developed in a direction of minimizing a reflection loss, and multiple core optical connectors are being developed in a direction of increasing a mounting density.

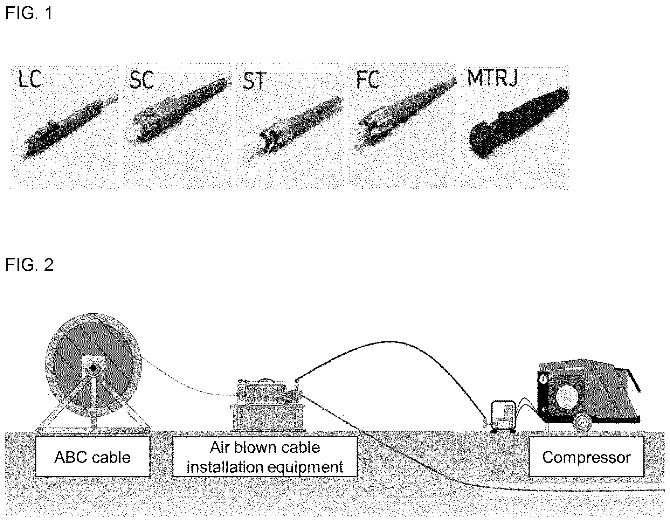

FIG. 1 is a perspective view showing types of a general optical connector.

As shown in FIG. 1, a representative type of the optical connector currently used includes LC, SC, ST, FC, and MTRJ types according to a shape of the connector, and various types of optical connectors are being used.

FIG. 2 is a perspective view showing air blown cable installation of an optical fiber cable.

Referring to FIG. 2, the air blown cable installation refers to a method of installing an optical fiber cable (optical fiber bundle) into a micro duct (tube) using compressed rotational air generated by a compressor and air blown cable installation equipment.

Among the air-blown installed optical fiber cables, outdoor optical fiber cables are mainly exposed to the outside and often receive a lot of tensile force, so the optical fiber cables are formed of materials having durability and flexibility. Among the optical fiber cables that are air-blown installed, an indoor optical fiber cable is an optical fiber cable that is connected to an indoor terminal from a subscriber terminal box and an indoor cable distributed from an optical distribution board to an optical communication system or optical communication equipment, and an optical fiber cable in the form of an optical code stranding is mainly applied.

Since an indoor or jumper optical fiber cable often has a very narrow space for installation, special structural characteristics convenient for installation are required, and in particular, heat resistance against heat and impact resistance due to impact is required. The Indoor cable is introduced into each subscriber's building, and the lead-in optical fiber cable is connected to an indoor terminal box by attaching a plug or connector.

Thus, in the case of the optical fiber cable inserted into the building, the optical connector is usually installed at an end part of the lead-in optical fiber cable entering the interior of an optical subscriber building, and the connector is previously attached to the end part of the optical fiber cable to allow the optical fiber to be directly connected between the system and each terminal box or system in the interior of the building through the connector, and then the optical fiber cable is installed.

Since the air blown apparatus of the optical fiber cable is inserted while blowing air into the micro duct (tube) during the air blown cable installation and blowing operations, the air blown apparatus of the optical fiber cable according to the related art may be installed only in a single core, and in order to form the multiple pre-connectorized optical fiber, there is a problem in that only the optical fiber is air-blown installed into the micro duct and then the optical connector needs to be reassembled at a site by mechanical connection or fusion connection.

### [Disclosure]

### [Technical Problem]

The present invention has been made in an effort to solve the above-described problems, and a first object to be solved by the present invention is to provide a air blown apparatus of a multiple pre-connectorized optical fiber cable for air blown cable installation and an optical connector, which can rapidly and easily perform an air blown cable installation operation by smooth entry into a micro duct by arranging at least one ferrule housing in series and forming the ferrule housing to be vertically bent at a predetermined angle while minimizing friction in a section where the micro duct is bent to within 180°.

A second object to be solved by the present invention is to provide a air blown apparatus of a multiple pre-connectorized optical fiber cable for air blown cable installation and an optical connector, which can easily perform an air blown cable installation operation by longitudinally forming a long groove in an outer surface of a ferrule housing to minimize friction with a micro duct during air blown cable installation and blowing operations.

A third object to be solved by the present invention is to provide an air blown apparatus of a multiple pre-connectorized optical fiber cable for air blown cable installation and an optical connector, which can be easily inserted due to reduction in resistance by a round portion of the front of a blowing head and can implement smooth movement inside a micro duct when the air blown apparatus of a multiple pre-connectorized optical fiber cable for air blown cable installation is inserted into the micro duct during air blown cable installation and blowing operations.

The technical objects of the present invention are not limited to the effects described above, and other technical objects that are not described will be clearly understood by those skilled in the art from the claims.

### [Technical Solution]

To achieve the above objects, according to the present invention, an air blown apparatus of a multiple pre-connectorized optical fiber cable for air blown cable installation, which is introduced into a micro duct during air blown cable installation and blowing operations, in which the air blown apparatus includes: a housing boot configured to support an optical fiber cable bundle while surrounding the outer circumference of an optical fiber cable bundle and protect an optical fiber cable to be bent without loss change, and having a male coupling part formed at an end part thereof and coupling protrusions formed at both left and right sides of the male coupling part; at least one ferrule housing provided with an optical fiber cable protection part for protecting the optical fiber cable, in which a female coupling part is formed at one end of the ferrule housing, coupling holes are formed in both left and right sides of the female coupling part, a male coupling part is formed at the other end of the ferrule housing, and coupling protrusions are formed at both left and right sides of the male coupling part; a ferrule assembly including a ferrule that is inserted into the ferrule housing and accommodates the optical fiber cable in a central portion thereof for aligning the optical fiber cable in a core axis direction, a ferrule flange that is fixed to an outer circumference of the ferrule for fixing an alignment position of the ferrule, and a spring that is installed inside the ferrule housing for elastically supporting the ferrule; and a blowing head fastened to the male coupling part of the ferrule housing for smooth movement inside the micro duct during the air blown cable installation and blowing operations, in which the at least one ferrule housing is connected in series by a structure in which the male coupling part is coupled to and inserted into the female coupling part, thereby forming the multiple pre-connectorized optical fiber cable.

In addition, the female coupling part may have an insert space with open top and bottom, the male coupling part may have an insertion protrusion part, and after the insertion protrusion part is inserted into the insert space, the coupling protrusions may be fastened into the coupling holes, and the ferrule housing may be configured to be vertically bent at a predetermined angle with respect to the coupling protrusions fastened into the coupling holes.

In addition, the male coupling part and the female coupling part, which are formed at both sides of the ferrule housing, may be alternately formed.

In addition, a long groove may be longitudinally formed in an outer surface of the ferrule housing to reduce friction with the micro duct during the air blown cable installation and blowing operations.

In addition, the optical fiber cable protection part may have a structure in which an upper side thereof is opened to allow insertion of the optical fiber cable and left and right sides thereof are closed to surround and support the optical fiber cable, and may be formed in a "C"-shaped structure.

### [Advantageous Effects]

As described above, the present invention provides the following effects.

First, at least one housing is arranged in series and the ferrule housing is configured to be vertically bent at a predetermined angle, so that it is possible to rapidly and easily perform the air blown cable installation operation by inducing smooth entry into the micro duct.

Second, a long groove is longitudinally formed in an outer surface of the ferrule housing, so that it is possible to easily perform the air blown cable installation operation by minimizing friction with the micro duct during the air blown cable installation and blowing operations.

Third, when the air blown apparatus of a multiple pre-connectorized optical fiber cable for air blown cable installation is inserted into the micro duct during the air blown cable installation and blowing operations, it is possible to easily insert the air blown apparatus due to reduction in resistance by a round portion of the front of the blowing head and to implement smooth movement inside the micro duct.

Fourth, reliability of data transmission and reception can be ensured by preventing the optical fiber cable from being excessively curved or bent, and an operation time can be substantially reduced due to a simple optical connector structure for fixedly installing the multiple pre-connectorized optical fiber cable in an optical adapter of an optical distribution box.

The effects of the present invention are not limited to the effects described above, and other effects that are not described will be clearly understood by those skilled in the art from the claims.

### [Description of Drawings]

FIG. 1 is a perspective view showing types of a general optical connector.
FIG. 2 is a perspective view showing air blown cable installation of an optical fiber cable.
FIG. 3 is a perspective view showing an air blown apparatus of a multiple pre-connectorized optical fiber cable for air blown cable installation according to a preferred embodiment of the present invention.
FIG. 4 is an exploded perspective view of FIG. 3.
FIG. 5 is a perspective view showing a ferrule assembly in the air blown apparatus of a multiple pre-connectorized optical fiber cable for air blown cable installation according to the preferred embodiment of the present invention.
FIGS. 6 to 8 are enlarged views of main parts of FIG. 4.
FIG. 9 is an enlarged view of a main part of the ferrule assembly in the air blown apparatus of a multiple pre-connectorized optical fiber cable for air blown cable installation according to the preferred embodiment of the present invention.
FIG. 10 is a perspective view showing an air blown apparatus of a multiple pre-connectorized optical fiber cable which has been air-blown installed.
FIG. 11 is a view showing an operation that is performed by bending the air blown apparatus of the multiple pre-connectorized optical fiber cable, in which one or more ferrule housings are arranged in series, at a predetermined angle in a micro duct.
FIG. 12 is a view showing an optical fiber cable having a multiple pre-connectorized structure.
FIG. 13 is a perspective view showing a ferrule assembly installed at an end of an optical fiber cable.
FIGS. 14 and 15 are perspective views showing coupling between the ferrule assembly and a stop ring (stopper).
FIG. 16 is a perspective view of an optical connector that is installed to connect the optical fiber cable with optical communication equipment.

### [Best Mode for Invention]

Hereinafter, an air blown apparatus of a multiple pre-connectorized optical fiber cable for air blown cable installation and an optical connector according to the preferred embodiments of the present invention will be described in detail with reference to the accompanying drawings.

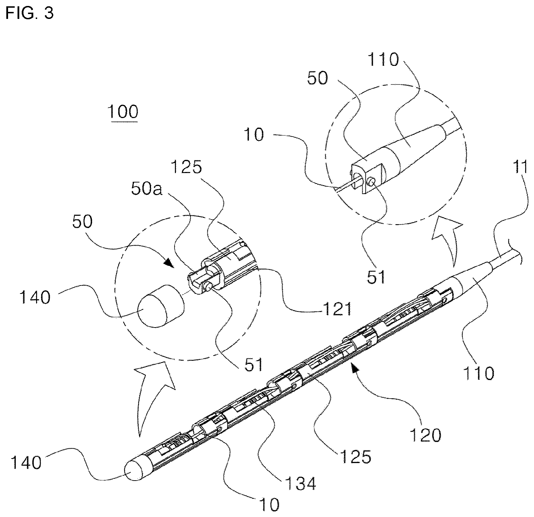

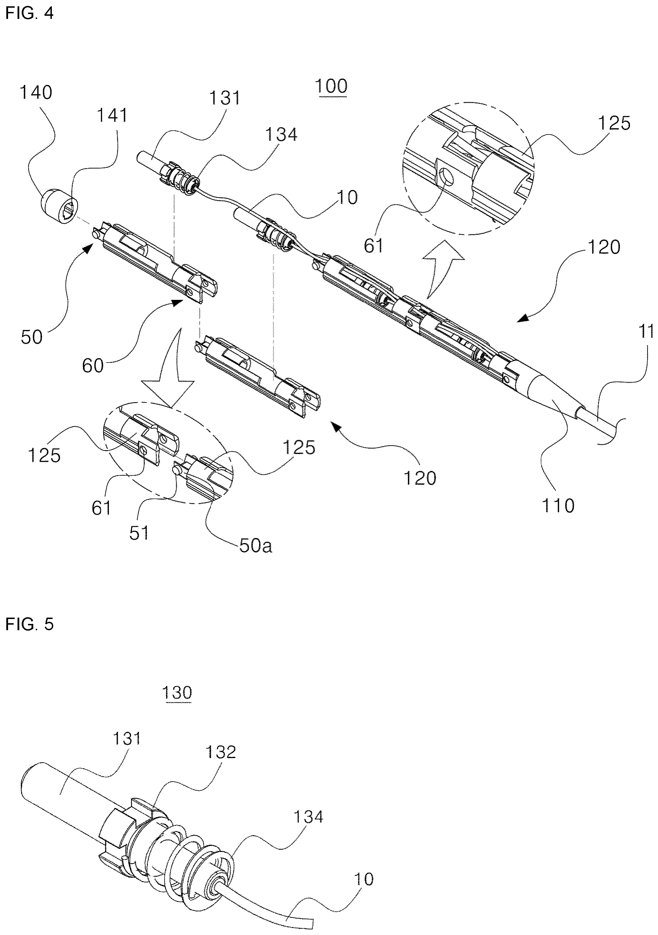

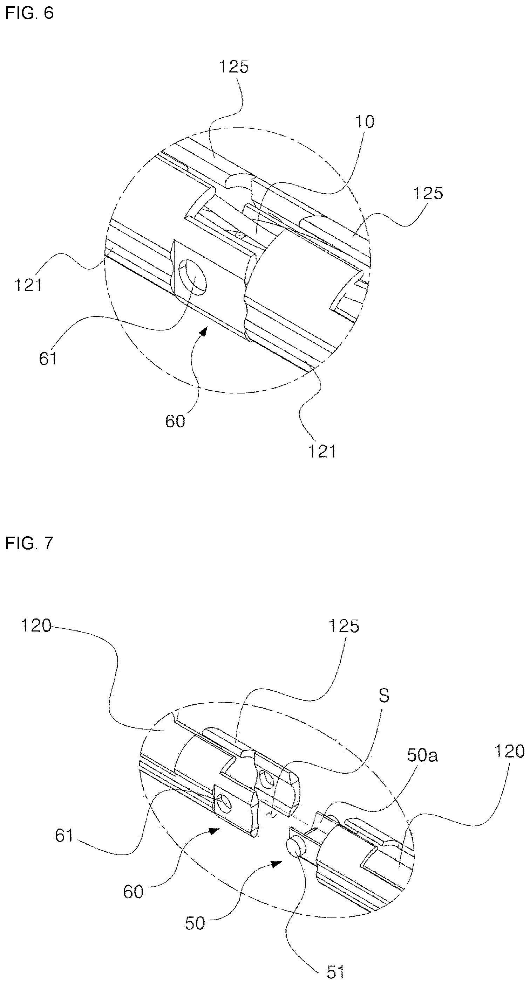

FIG. 3 is a perspective view showing an air blown apparatus of a multiple pre-connectorized optical fiber cable for air blown cable installation according to a preferred embodiment of the present invention, FIG. 4 is an exploded perspective view of FIG. 3, FIG. 5 is a perspective view showing a ferrule assembly in the air blown apparatus of a multiple pre-connectorized optical fiber cable for air blown cable installation according to the preferred embodiment of the present invention, and FIGS. 6 to 8 are enlarged views of main parts of FIG. 4.

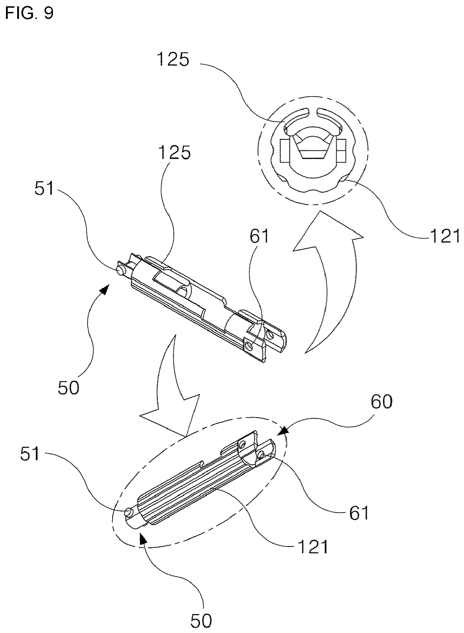

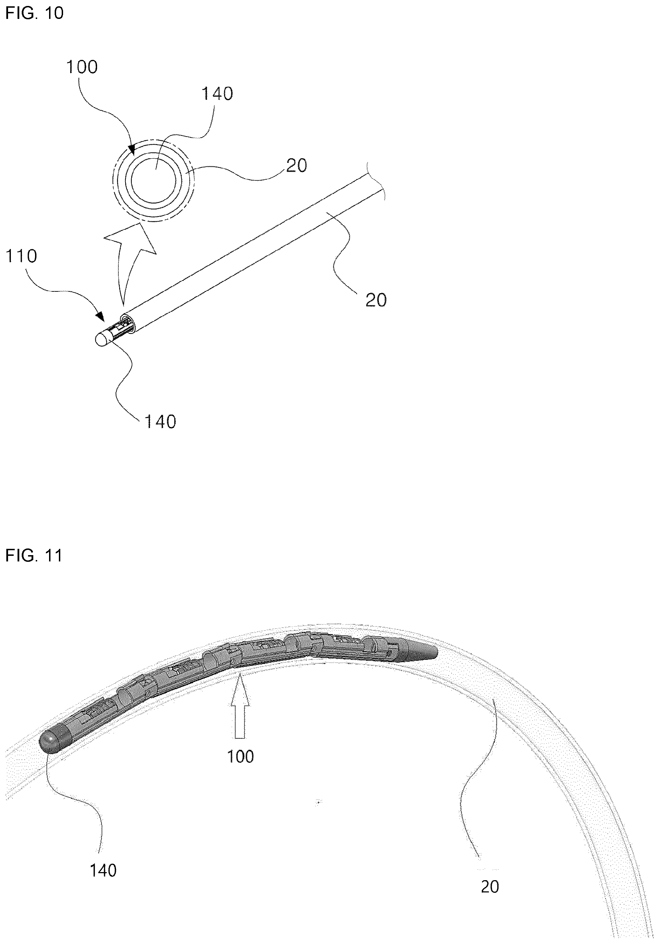

FIG. 9 is an enlarged view of a main part of the ferrule assembly in the air blown apparatus of a multiple pre-connectorized optical fiber cable for air blown cable installation according to the preferred embodiment of the present invention, and FIG. 10 is a perspective view showing an air blown apparatus of a multiple pre-connectorized optical fiber cable which has been air-blown installed.

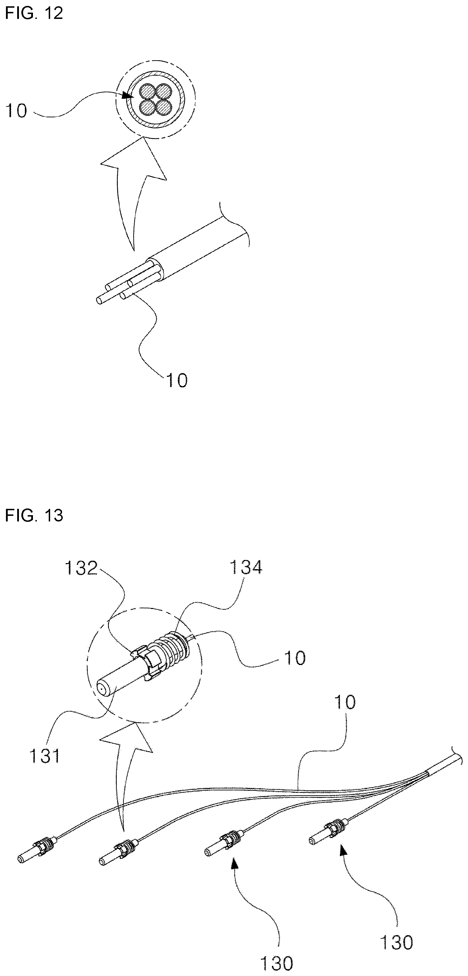

FIG. 11 is a view showing an operation that is performed by bending the air blown apparatus of a multiple pre-connectorized optical fiber cable, in which one or more ferrule housings are arranged in series, at a predetermined angle in a micro duct, and FIG. 12 is a view showing an optical fiber cable having a multiple pre-connectorized structure.

Referring to the above drawings, an air blown apparatus 100 for a multiple pre-connectorized optical fiber cable for air blown cable installation according to the preferred embodiment of the present invention is smoothly inserted into a micro duct 20 (shown in FIG. 10) during air blown cable installation and blowing operations.

The air blown apparatus 100 for a multiple pre-connectorized optical fiber cable for air blown cable installation according to the preferred embodiment of the present invention includes: a housing boot 110 configured to protect an optical fiber cable bundle 11 while surrounding the optical fiber cable bundle 11; at least one ferrule housing 120 coupled to the housing boot 110 and arranged in series; a ferrule assembly 130; and a blowing head 140 fastened to a male coupling part 50 of the ferrule housing 120 for smooth movement inside the micro duct 20 during the air blown cable installation and blowing operations, in which the air blown apparatus is configured to be bent at a predetermined angle by at least one ferrule housing 120 arranged in series.

Hereinafter, the air blown apparatus of a multiple pre-connectorized optical fiber cable for air blown cable installation according to the preferred embodiment of the present invention will be described in more detail.

The housing boot 110 supports the optical fiber cable bundle 11 while surrounding the outer circumference of the optical fiber cable bundle 11 and protects the optical fiber cable 10 to be bent without loss change, and has the male coupling part 50 formed at an end part thereof and coupling protrusions 51 formed at both left and right sides of the male coupling part 50. The optical fiber cable bundle 11 refers to a bundle of optical fiber cables 10.

In addition, the ferrule housing 120 is provided with an optical fiber cable protection part 125 for protecting the optical fiber cable 10, in which a female coupling part 60 is formed at one end of the ferrule housing 120, coupling holes 61 are formed in both left and right sides of the female coupling part 60, a male coupling part 50 is formed at the other end of the ferrule housing 120, and coupling protrusions 51 are formed at both left and right sides of the male coupling part 50.

The male coupling part 50 and the female coupling part 60 are alternately formed at both sides of the ferrule housing 120 for connection between the ferrule housings 120.

As shown in FIG. 3, four ferrule housings 120 are arranged in series, and the ferrule housings 120 are configured to rotate (be bent) vertically at a predetermined angle with respect to the coupling protrusions 51 fastened into the coupling holes 61.

For example, when one ferrule housing 120 rotates at 15°, four ferrule housings 120 may rotate up to 60°, so that the air blown cable installation operation may be very easily and rapidly performed by bending the ferrule housing 120.

That is, as shown in FIGS. 3 to 12, the female coupling part 60 has an insert space S (shown in FIG. 7) with open top and bottom, the male coupling part 50 has an insertion protrusion part 50a, and after the insertion protrusion part 50a is inserted into the insert space S, the coupling protrusions 51 are fastened into the coupling holes 61, and the ferrule housing 120 is configured to be vertically bent at a predetermined angle with respect to the coupling protrusions 51 fastened into the coupling holes 61, so that smooth movement into the micro duct 20 may be induced during the air blown cable installation operation.

A long groove 121 may be longitudinally formed in an outer surface of the ferrule housing 120 to enable smooth entry of the ferrule housing 120 and reduce friction with the micro duct 20 during the air blown cable installation and blowing operations. As air moves through the long groove 121, friction between the ferrule housing 120 and the micro duct 20 is reduced, thereby improving workability of air blown cable installation and efficiently preventing damage to the ferrule housing 120.

The optical fiber cable protection part 125 may have a structure in which an upper side thereof is opened to allow insertion of the optical fiber cable 10 and left and right sides thereof are closed to surround and support the optical fiber cable 10, and may be formed in a schematically "C"-shaped structure (shown in FIG. 9).

In addition, as shown in FIG. 5, the ferrule assembly 130 includes a ferrule 131, a ferrule flange 132, and a spring 134.

The ferrule 131 is inserted into the ferrule housing 120 and accommodates the optical fiber cable 10 in a central portion thereof for aligning the optical fiber cable 10 in a core axis direction.

The ferrule flange 132 is fixed to an outer circumference of the ferrule 131 for fixing an alignment position of the ferrule 131.

The spring 134 is installed inside the ferrule housing 120 for elastically supporting the ferrule 131.

In addition, as shown in FIGS. 3 to 8, a blowing head 140 is fastened to a front end part of the ferrule housing 120, that is, to the male coupling part 50 of the ferrule housing 120 for smooth movement inside the micro duct 20 during the air blown cable installation and blowing operations. The male coupling part 50 is coupled to an inside of a coupling groove 141 of the blowing head 140.

As shown in FIGS. 3 to 8, in the air blown apparatus 100 of a multiple pre-connectorized optical fiber cable for air blown cable installation according to the preferred embodiment of the present invention, at least one ferrule housing 120 is connected in series by a structure in which the male coupling part 50 is inserted into and coupled to the female coupling part 60 to form the multiple pre-connectorized optical fiber cable (optical fiber bundle) (see FIG. 12).

In addition, as shown in FIG. 11, the air blown cable installation may be rapidly and easily performed by bending the air blown apparatus 100 of a multiple pre-connectorized optical fiber cable, in which one or more ferrule housings are arranged in series, at a predetermined angle in the micro duct 20.

Effects of the air blown apparatus of a multiple pre-connectorized optical fiber cable for air blown cable installation according to the preferred embodiment of the present invention, which are configured as described above, are as follows.

The air blown apparatus 100 of a multi pre-connectorized optical fiber cable for air blown cable installation is inserted into the micro duct 20 during the air blown cable installation and blowing operations, and in this case, it is possible to easily insert the air blown apparatus 100 due to reduction in resistance by a round portion of the front of the blowing head 140 and to perform smooth movement inside the micro duct 20 (see FIGS. 3 and 11).

In the air blown apparatus 100 of a multi pre-connectorized optical fiber cable for air blown cable installation according to the preferred embodiment of the present invention, at least one ferrule housing 120 is arranged in series, and the ferrule housing 120 is configured to be vertically bent at a predetermined angle with respect to the coupling protrusions 51 fastened into the coupling holes 61, so that it is possible to induce smooth movement inside the micro duct 20.

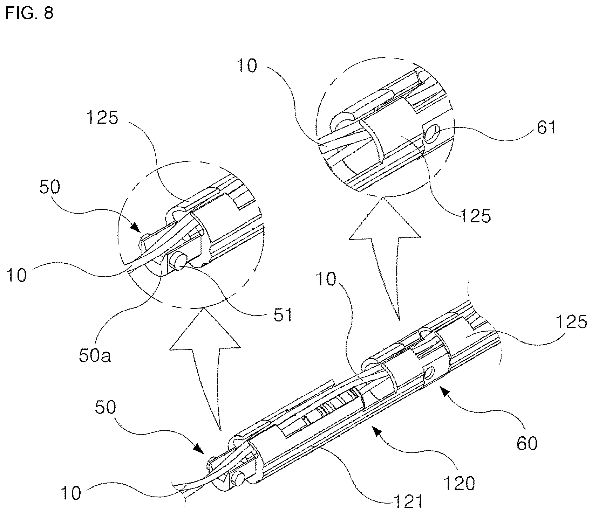

Furthermore, the long groove 121 is longitudinally formed in the outer surface of the ferrule housing 120, so that it is possible to easily perform the air blown cable installation operation while minimizing friction with the micro duct 20 during the air blown cable installation and blowing operations (shown in FIGS. 8 and 9).

In addition, FIG. 13 is a perspective view showing a ferrule assembly installed at an end of the optical fiber cable.

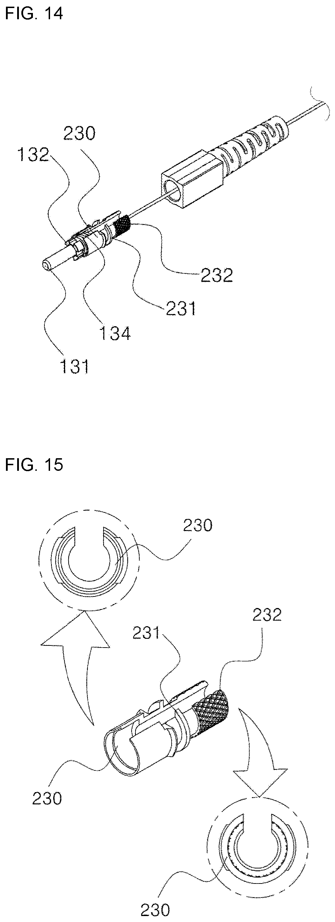

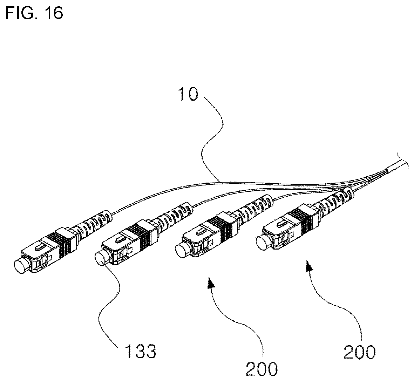

FIGS. 14 and 15 are perspective views showing coupling between the ferrule assembly and a stop ring (stopper), and FIG. 16 is a perspective view of an optical connector that is installed to connect the optical fiber cable with optical communication equipment.

Referring to above drawings, the present invention may form the optical fiber cable 10 having a multiple pre-connectorized structure and the ferrule assembly 130 in each optical fiber cable 10.

An optical connector 200 according to the preferred embodiment of the present invention may include: an optical connector boot 210 configured to protect an optical fiber cable 10 to be bent without loss change while surrounding an outer circumference of the optical fiber cable 10 in order to support the optical fiber cable 10; a ferrule assembly 130 including a ferrule 131, a ferrule flange 132, a ferrule protection cap 133 (shown in FIG. 16), and a spring 134; an optical connector plug 220 for coupling with an optical adapter (not shown); and a stop ring (stopper) 230 configured to protect the ferrule assembly 130 while surrounding the ferrule assembly 130, and to connect the optical connector boot 210 and the optical connector plug 220 to each other.

The ferrule protection cap 133 is coupled to a front end part of the ferrule 131 to protect the ferrule 131 against scratches or pollution sources.

As described above, the ferrule assembly 130 includes: the ferrule 131 that is inserted into the ferrule housing 120 and accommodates the optical fiber cable 10 in a central portion thereof for aligning the optical fiber cable 10 in a core axis direction; the ferrule flange 132 that is fixed to an outer circumference of the ferrule 131 for fixing an alignment position of the ferrule 131; and the spring 134 that is installed inside the ferrule housing 120 for elastically supporting the ferrule 131.

As shown in FIG. 15, the stop ring (stopper) 230 may be formed in a "C" type, in which a stopper part 231 is formed in the middle thereof and a close-contact protrusion part 232 may be formed at an end part thereof.

The type of the optical connector 200 according to the preferred embodiment of the present invention is not limited to an SC type, and may be equally applied to other types of LC, SC, ST, FC, and MTRJ.

As described above, the present invention provides the following effects.

First, at least one ferrule housing is arranged in series and the ferrule housing is configured to be vertically bent at a predetermined angle, so that it is possible to rapidly and easily perform the air blown cable installation operation by inducing smooth entry into the micro duct.

Second, a long groove is longitudinally formed in an outer surface of the ferrule housing, so that it is possible to easily perform the air blown cable installation operation by minimizing friction with the micro duct during the air blown cable installation and blowing operations.

Third, when the air blown apparatus of a multiple pre-connectorized optical fiber cable for air blown cable installation is inserted into the micro duct during air blown cable installation and blowing operations, it is possible to easily insert the air blown apparatus due to reduction in resistance by a round portion of the front of the blowing head and to implement smooth movement inside the micro duct.

Fourth, reliability of data transmission and reception can be ensured by preventing the optical fiber cable from being excessively curved or bent, and an operation time can be substantially reduced due to a simple optical connector structure for fixedly installing the multiple pre-connectorized optical fiber cable in an optical distribution box.

Meanwhile, the preferred embodiments of the present invention have been disclosed in the present specification and drawings, and although specific terms are used, these are merely used in a general sense to easily describe the technical contents of the present invention and help understanding of the present invention, and are not intended to limit the scope of the present invention.

It will be apparent to those of ordinary skill in the art to which the present invention pertains that other modifications based on the technical spirit of the present invention may be implemented in addition to the embodiments disclosed herein.

## Claims

1. An air blown apparatus of a multiple pre-connectorized optical fiber cable for air blown cable installation, which is introduced into a micro duct (20) during air blown cable installation and blowing operations, the air blown apparatus comprising:
a housing boot (110) configured to support an optical fiber cable bundle (11) while surrounding the outer circumference of an optical fiber cable bundle (11) and protect an optical fiber cable (10) to be bent without loss change, and having a male coupling part (50) formed at an end part thereof and coupling protrusions (51) formed at both left and right sides of the male coupling part (50);
at least one ferrule housing (120) provided with an optical fiber cable protection part (125) for protecting the optical fiber cable (10), in which a female coupling part (60) is formed at one end of the ferrule housing (120), coupling holes (61) are formed in both left and right sides of the female coupling part (60), a male coupling part (50) is formed at the other end of the ferrule housing (120), and coupling protrusions (51) are formed at both left and right sides of the male coupling part (50);
a ferrule assembly (130) including a ferrule (131) that is inserted into the ferrule housing (120) and accommodates the optical fiber cable (10) in a central portion thereof for aligning the optical fiber cable (10) in a core axis direction, a ferrule flange (132) that is fixed to an outer circumference of the ferrule (131) for fixing an alignment position of the ferrule (131), and a spring (134) that is installed inside the ferrule housing (120) for elastically supporting the ferrule (131); and
a blowing head (140) fastened to the male coupling part (50) of the ferrule housing (120) for smooth movement inside the micro duct (20) during the air blown cable installation and blowing operations,
wherein the at least one ferrule housing (120) is connected in series by a structure in which the male coupling part (50) is coupled to and inserted into the female coupling part (60), thereby forming the multiple pre-connectorized optical fiber cable.

2. The air blown apparatus of claim 1, wherein the female coupling part (60) has an insert space (S) with open top and bottom, the male coupling part (50) has an insertion protrusion part (50a), and after the insertion protrusion part (50a) is inserted into the insert space (S), the coupling protrusions (51) are fastened into the coupling holes (61), and
the ferrule housing (120) is configured to be vertically bent at a predetermined angle with respect to the coupling protrusions (51) fastened into the coupling holes (61).

3. The air blown apparatus of claim 1, wherein the male coupling part (50) and the female coupling part (60), which are formed at both sides of the ferrule housing (120), are alternately formed.

4. The air blown apparatus of claim 1, wherein a long groove (121) is longitudinally formed in an outer surface of the ferrule housing (120) to reduce friction with the micro duct (20) during the air blown cable installation and blowing operations.

5. The air blown apparatus of claim 1, wherein the optical fiber cable protection part (125) has a structure in which an upper side thereof is opened to allow insertion of the optical fiber cable (10) and left and right sides thereof are closed to surround and support the optical fiber cable (10).

6. The air blown apparatus of claim 5, wherein the optical fiber cable protection part (125) has a "C"-shaped structure.

7. A air blown apparatus of a multiple pre-connectorized optical fiber cable for air blown cable installation, which is inserted into a micro duct (20) during air blown cable installation and blowing operations, the air blown apparatus comprising:
a housing boot (110) configured to protect an optical fiber cable bundle (11) while surrounding the optical fiber cable bundle (11);
at least one ferrule housing (120) coupled to the housing boot (110) and arranged in series;
a ferrule assembly (130); and
a blowing head (140) fastened to the male coupling part (50) of the ferrule housing (120) for smooth movement inside the micro duct (20) during the air blown cable installation and blowing operations,
wherein the air blown apparatus is configured to be bent at a predetermined angle by at least one ferrule housing (120) arranged in series.

8. The air blown apparatus of claim 7, wherein the male coupling part (50) and the female coupling part (60) are alternately formed at both sides of the ferrule housing (120) for connection between the ferrule housings (120).
